(19) Europäisches Patentamt
European Patent Office
Office européen des brevets

(11) **EP 2 170 631 B1**

(12) **EUROPÄISCHE PATENTSCHRIFT**

(45) Veröffentlichungstag und Bekanntmachung des Hinweises auf die Patenterteilung:
**19.10.2016 Patentblatt 2016/42**

(21) Anmeldenummer: **08736569.8**

(22) Anmeldetag: **25.04.2008**

(51) Int Cl.:
**B60C 23/06** ^(2006.01)

(86) Internationale Anmeldenummer:
**PCT/EP2008/055046**

(87) Internationale Veröffentlichungsnummer:
**WO 2009/000573 (31.12.2008 Gazette 2009/01)**

(54) **VERFAHREN UND VORRICHTUNG ZUR REIFENZUSTANDSÜBERWACHUNG**

METHOD AND DEVICE FOR MONITORING THE STATE OF TYRES

PROCÉDÉ ET DISPOSITIF DE SURVEILLANCE DE L'ÉTAT D'UN BANDAGE DE ROUE

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **28.06.2007 DE 102007029870**

(43) Veröffentlichungstag der Anmeldung:
**07.04.2010 Patentblatt 2010/14**

(73) Patentinhaber: **Continental Teves AG & Co. OHG 60488 Frankfurt (DE)**

(72) Erfinder:
• **KÖBE, Andreas 64625 Bensheim (DE)**
• **SCHREINER, Frank 61381 Friedrichsdorf (DE)**
• **FISCHER, Daniel 65824 Schwalbach (DE)**

(74) Vertreter: **Brand, Markus Continental Teves AG & Co. oHG Patent- und Lizenzabteilung Guerickestrasse 7 60488 Frankfurt am Main (DE)**

(56) Entgegenhaltungen:
**EP-A- 1 336 513      EP-A- 1 475 250
EP-A- 1 777 083      GB-A- 2 246 461
GB-A- 2 326 007**

EP 2 170 631 B1

**Beschreibung**

Die Erfindung betrifft ein Verfahren gemäß Oberbegriff von Anspruch 1 und eine Vorrichtung gemäß Oberbegriff von Anspruch 11.

In modernen Kraftfahrzeugen finden vermehrt Systeme Anwendung, welche zu einem aktiven oder passiven Schutz der Insassen beitragen. Systeme zur Reifendrucküberwachung schützen die Fahrzeuginsassen vor Fahrzeugschäden, welche beispielsweise auf einen abnormalen Reifenluftdruck zurückzuführen sind. Durch einen abnormalen Reifenluftdruck können sich beispielsweise der Reifenverschleiß und der Kraftstoffverbrauch erhöhen oder es kann zu einem Reifendefekt ("Reifenplatzer") kommen. Es sind bereits verschiedene Reifendrucküberwachungssysteme bekannt, welche entweder auf Basis direkt messender Sensoren arbeiten oder durch Auswertung von Drehzahl- oder Schwingungseigenschaften der Fahrzeugräder einen abnormalen Reifendruck erkennen.

Es sind so genannte direkt messende Reifendrucküberwachungssysteme bekannt, wie z.B. in der Anmeldung DE 199 26 616 C2 beschrieben, welche mittels Drucksensoren in den einzelnen Reifen den jeweiligen Druck in dem zugehörigen Rad ermitteln. Es sind weiterhin so genannte indirekt messende Reifendrucküberwachungssysteme (DDS: Deflation Detection System) bekannt, wie z.B. aus der DE 100 58 140 A1, welche aus Hilfsgrößen, z.B. durch Vergleich der Abrollumfänge der einzelnen Räder, einen Druckverlust ermitteln können.

In der WO 01/87647 A1 ist ein Verfahren und eine Vorrichtung zur Reifendrucküberwachung beschrieben, welche/s ein auf der Erfassung von Radradien basierendes Reifendrucküberwachungssystem und ein auf der Auswertung von Schwingungseigenschaften basierendes Reifendrucküberwachungssystem kombiniert. Mit aus dem Stand der Technik bekannten indirekten Verfahren zur Reifendrucküberwachung, die auf der Beobachtung der Abrollumfänge basieren, können nur relative Veränderungen der Abrollumfänge von bis zu drei Rädern gegenüber einem eingelernten Zustand erkannt werden. Der absolute Abrollumfang der Reifen ist bei diesen, aus dem Stand der Technik bekannten indirekten Verfahren unbekannt, da eine unabhängige Information über die Fahrzeuggeschwindigkeit nicht zur Verfügung steht. Aus diesem Grund kann ein gleichzeitiger Druckverlust an allen vier Reifen von diesen Systemen nicht erkannt werden.

Ein Verfahren zur Bestimmung der absoluten Abrollumfänge der Räder eines Kraftfahrzeuges aus den Raddrehzahlinformationen wird in der DE 10 2005 014 099 A1 offenbart. Hierbei wird die Zeitdifferenz zwischen dem Auftreten korrespondierender Vibrationen in den Raddrehzahlsignalen an Vorder- und Hinterrad derselben Fahrzeugseite verwendet, um eine absolute Fahrzeuggeschwindigkeit und die absoluten Abrollumfänge der vier Räder zu bestimmen 13.

Ein Verfahren gemäß dem Oberbegriff des Anspruchs 1 ist aus der GB2246461A bekannt.

Ziel der Erfindung ist es, ein Reifenzustandsüberwachungssystem für ein Kraftfahrzeug basierend auf der Auswertung der Raddrehbewegung bereitzustellen, bei welchem die Zuverlässigkeit der Erkennung und Bewarnung von Reifenluftdruckverlusten und/oder einer übermäßigen Belastung/Auslastung des Reifens erhöht ist.

Diese Aufgabe wird erfindungsgemäß durch das Verfahren nach Anspruch 1 und die Vorrichtung nach Anspruch 11 gelöst.

Der Erfindung liegt der Gedanke zugrunde, Raddrehzahlinformationen und Signale eines Sensors zur Messung der Geschwindigkeit des Fahrzeugs über Untergrund auszuwerten, um absolute Reifenabrollumfänge zu bestimmen und damit eine verbesserte Reifenüberwachung durchzuführen.

Erfindungsgemäß wird in Verallgemeinerung unter dem Begriff "absoluter Reifenabrollumfang" auch jede Größe verstanden, welche den Reifenabrollumfang eines Fahrzeugrades repräsentiert, wie z.B. der Reifenradius.

Unter dem Begriff "Raddrehzahl" wird erfindungsgemäß in Verallgemeinerung eine Größe verstanden, welche die Raddrehzahl eines Fahrzeugrades repräsentiert. Dies kann z.B. auch eine Radumlaufzeit sein. Entsprechend wird unter dem Begriff "Raddrehzahlsignal" erfindungsgemäß ein Signal verstanden, welches die Raddrehzahl eines Fahrzeugrades repräsentiert.

Bevorzugt wird ein Reifendruckverlust und/oder eine übermäßige Belastung bzw. Auslastung des Reifens dadurch erkannt, dass ein Vergleich eines aktuell bestimmten absoluten Abrollumfangs mit wenigstens einem absoluten Abrollumfangsvergleichswert durchgeführt wird. Besonders bevorzugt wird die Differenz aus dem aktuell bestimmten absoluten Abrollumfang und dem Abrollumfangsvergleichswert gebildet. Ist diese größer als ein vorgegebener Schwellenwert, so wird auf einen Druckverlust und/oder eine übermäßige Belastung des Reifens erkannt.

Der Sensor zur Messung der Geschwindigkeit des Fahrzeugs über Untergrund basiert erfindungsgemäß auf einem optischen oder auf Radar basierten Messverfahren. Hierfür ist der Sensor besonders bevorzugt am Fahrzeug angeordnet. Der Sensor sendet besonders bevorzugt elektromagnetische Strahlung aus, welche von der Fahrbahnoberfläche und/oder sonstigen ortsfesten Gegenständen reflektiert wird. Die Geschwindigkeit des Fahrzeugs über Untergrund wird ganz besonders bevorzugt anhand von Sensoren zur automatischen Abstands- und/oder Geschwindigkeitsregelung (ACC: Adaptive Cruise Control) oder Kameras zur Geschwindigkeitsschätzung bestimmt.

Erfindungsgemäß werden aus den Signalen des Sensors zur Messung der Geschwindigkeit des Fahrzeugs über Untergrund eine Fahrzeuglängsgeschwindigkeit und/oder eine Fahrzeugquergeschwindigkeit bestimmt. Aus diesen werden dann besonders bevorzugt die absoluten Fahrzeuggeschwindigkeiten an den Radaufstandspunkten bestimmt.

Hierzu wird neben der Fahrzeuglängsgeschwindigkeit und der Fahrzeugquergeschwindigkeit die Gierrate herangezogen. So können auch bei Kurvenfahrt die absoluten Fahrzeuggeschwindigkeiten an den Radaufstandspunkten bestimmt werden.

Es ist bevorzugt, dass aus den absoluten Fahrzeuggeschwindigkeiten an den Radaufstandspunkten die Geschwindigkeitskomponenten in Radlängsrichtung bestimmt werden. Diese gehen dann in die Berechnung der absoluten Abrollumfänge ein.

Zur Bestimmung der Geschwindigkeitskomponenten in Radlängsrichtung werden bevorzugt der/die Vorspurwinkel der Hinterräder und/oder der Radeinschlagswinkel der Vorderräder berücksichtigt. So ist eine hinreichend genaue Bestimmung der Geschwindigkeitskomponenten in Radlängsrichtung möglich. Der Radeinschlagswinkel wird besonders bevorzugt durch einen Sensor bestimmt. So wird eine möglichst genaue und zuverlässige Bestimmung erreicht. Es ist aber auch besonders bevorzugt, dass der Radeinschlagswinkel anhand eines Lenkungsmodells aus dem Lenkradwinkel bestimmt wird. Damit werden die Kosten für einen Radeinschlagswinkelsensor eingespart.

Bevorzugt werden die absoluten Abrollumfänge für jedes Rad bestimmt, damit eine Überwachung jedes einzelnen Rades möglich ist.

Gemäß einer bevorzugten Ausführungsform des erfindungsgemäßen Verfahrens werden die absoluten Reifenabrollumfänge eingelernt, wenn das Einlernen durch Betätigung eines Betätigungselements oder einer Betätigungsfunktion durch den Fahrer initiiert wird. Der Fahrer stellt sicher, dass die korrekten Reifendrücke eingestellt sind, und gibt dies dem Überwachungssystem durch Initiierung bekannt. Nun werden die Vergleichswerte eingelernt.

Alternativ ist es bevorzugt, dass die absoluten Reifenabrollumfänge in dem erfindungsgemäßen Verfahren eingelernt werden, wenn durch ein zweites Reifenzustandsüberwachungssystem ein automatisches Einlernen gestartet wird. Hierdurch wird der Einlernvorgang unabhängig vom Fahrer. Das zweite Reifenüberwachungssystem ist besonders bevorzugt ein direkt messendes Reifendrucküberwachungssystem, welches mindestens einen Reifendrucksensor umfasst. Durch Vergleich der mit den Drucksensoren gemessenen Reifendrücke mit vorgegebenen Schwellenwerten stellt das zweite Reifenzustandsüberwachungssystem fest, dass die korrekten Reifendrücke für ein Einlernen vorliegen.

Die Vergleichswerte der absoluten Reifenabrollumfänge sind bevorzugt in Abhängigkeit von mindestens einer der folgenden Größen vorgegeben bzw. werden in Abhängigkeit von mindestens einer der folgenden Größen eingelernt: Geschwindigkeit, Antriebsmoment, Gierrate und Querbeschleunigung. Dementsprechend wird der Vergleich von aktuell bestimmten absoluten Reifenabrollumfang und Vergleichswert bei bezüglich Geschwindigkeit und/oder Antriebsmoment und/oder Gierrate und/oder Querbeschleunigung vergleichbaren/m Wert(en) durchgeführt. Besonders bevorzugt finden das Einlernen und die Überwachung (der Vergleich) in Wertebereichen bzw. Intervallen der Geschwindigkeit und/oder des Antriebsmoments und/oder der Querbeschleunigung statt. Hierdurch wird bei begrenztem Rechen- und Speicher-Aufwand die Abhängigkeit des Abrollumfangs von diesen Größen berücksichtigt.

Das erfindungsgemäße Verfahren wird bevorzugt in einem indirekt und/oder direkt messenden Reifendrucküberwachungssystem durchgeführt. Hierdurch ist eine gegenseitige Plausibilisierung der Ergebnisse der verschiedenen Verfahren möglich.

Dies führt zu einer zuverlässigeren Druckverlustbewarnung und zu weniger Fehlwarnungen.

Ein Vorteil der Erfindung liegt in der Erkennung eines Druckverlustes an allen vier Reifen gleichzeitig.

Weitere bevorzugte Ausführungsformen ergeben sich aus den Unteransprüchen und der nachfolgenden Beschreibung eines Ausführungsbeispiels an Hand von Figuren.

Es zeigen

Fig. 1    ein schematisches Blockschaltbild eines beispielgemäßen Verfahrens, und

Fig. 2    schematisch den Zusammenhang zwischen einzelnen Größen.

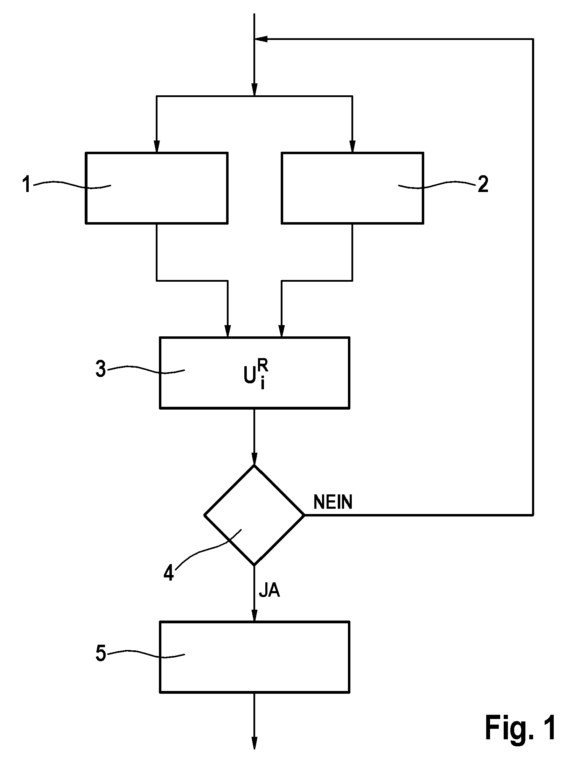

In Fig. 1 ist ein schematisches Blockschaltbild eines Ausführungsbeispiels eines erfindungsgemäßen Verfahrens dargestellt. In Block 1 werden die Raddrehzahlen der Räder bestimmt. Die vorliegende Erfindung verwendet die Information eines Sensors, der die Absolutgeschwindigkeit des Fahrzeugs bestimmt (Block 2). Mit derartigen Sensoren steht üblicherweise die Information über die Fahrzeuglängsgeschwindigkeit $v^F_x$ und Fahrzeugquergeschwindigkeit $V^F_y$ zur Verfügung. Aus diesen Größen werden die absoluten Abrollumfänge $U^R_i$ der Reifen bestimmt (Block 3), die für die Reifendrucküberwachung (Block 5) verwendet werden.

Der Index i steht für ein Rad (i=VR (vorne rechts), i=VL (vorne links), i=HR (hinten rechts), i=HL (hinten links)).

Zur Bestimmung der absoluten Abrollumfänge $U^R_i$ werden zunächst die absoluten Fahrzeuggeschwindigkeiten an den Radaufstandspunkten $v^R_i$ bestimmt. Bei Geradausfahrt sind die Fahrzeuggeschwindigkeiten an den Radaufstandspunkten gleich der Fahrzeuglängsgeschwindigkeit ($v^R_i = v^F_x$). Bei Kurvenfahrten können die Fahrzeuggeschwindigkeiten an den Radaufstandspunkten $v^R_i$ aus der Fahrzeuglängs- $v^F_x$ und Fahrzeugquergeschwindigkeit $v^F_y$ unter Berücksichtigung der Gierrate $\dot\psi$ berechnet werden:

$$v^R_{i,x} = v^F_x + \dot{\psi} \cdot l_i$$

$$v^R_{i,y} = v^F_y - \dot{\psi} \cdot b_i$$

$$v^R_i = \sqrt{(v^R_{i,x})^2 + (v^R_{i,y})^2}$$

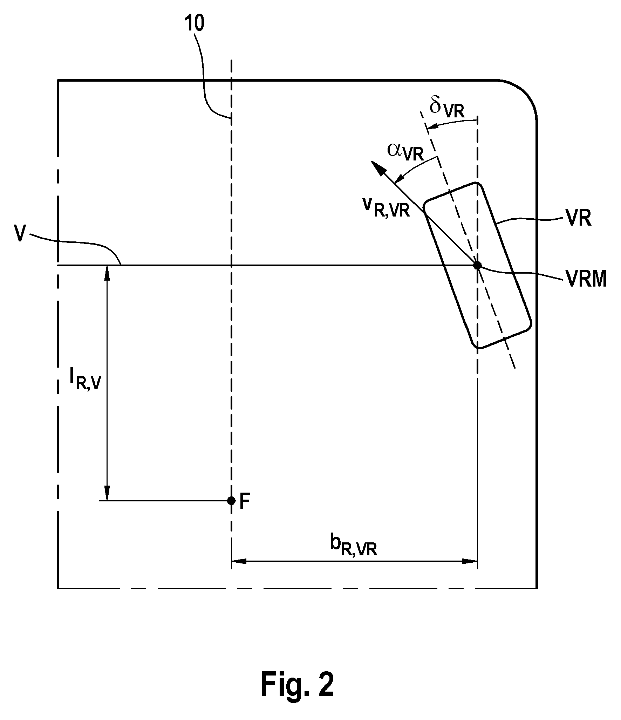

mit (siehe auch Fig. 2 am Beispiel des Vorderrades VR)

$l_i$ : (senkrechter) Abstand $l_{R,V}$ bzw. $l_{R,H}$ zwischen Fahrzeugschwerpunkt F und Vorderachse V bzw. Hinterachse H ($l_i = l_{R,V}$, $l_{R,V}$, $-l_{R,H}$, $-l_{R,H}$ für i=VL, VR, HL, HR)
und

$b_i$: (senkrechter) Abstand zwischen Fahrzeuglängsachse 10 und Radmittelpunkt VRM ($b_i = b_{R,VL}$, $-b_{R,VR}$, $b_{R,HL}$, $-b_{R,HR}$ für i=VL, VR, HL, HR).

Die Geschwindigkeit an den Radaufstandspunkten weist je nach Fahrsituation nicht in Radlängsrichtung. Der Winkel zwischen diesen Richtungen nennt man Schräglaufwinkel $\alpha_i$. Mit dem Radeinschlagswinkel $\delta_i$ lässt sich der Schräglaufwinkel $\alpha_i$ berechnen:

$$\alpha_i = \delta_i - \arctan\frac{v^R_{i,y}}{v^R_{i,x}}$$

Der Radeinschlagswinkel $\delta_i$ beinhaltet z.B. den Vorspurwinkel an der Hinterachse und/oder den Radeinschlagswinkel an der Vorderachse. Der Radeinschlagswinkel an der Vorderachse kann, wenn kein Sensor vorhanden ist, aus dem Lenkradwinkel und einem Lenkungsmodell bestimmt werden.
Aus den absoluten Fahrzeuggeschwindigkeiten an den Radaufstandspunkten wird anschließend die Geschwindigkeitskomponente in Radlängsrichtung über $v^R_i \cdot \cos\alpha_i$ berechnet.
Die absoluten Abrollumfänge ergeben sich aus

$$U^R_i = \frac{v^R_i \cdot \cos\alpha_i}{\omega^{dreh}_i}$$

wobei $\omega^{dreh}_i$ die Raddrehfrequenz des Rades i ist, welche z.B. mit Hilfe eines ABS-Drehzahlsensors (ABS: Antiblockier-System) bestimmt wird.
Die absoluten Abrollumfänge $U^R_i$ werden bevorzugt zur Reifendrucküberwachung herangezogen. Hierzu werden in einem Verfahren zur Erkennung von Druckverlusten am Reifen die nach obigem Verfahren ermittelten Abrollumfänge zunächst gelernt (Abfrage 4 in Fig. 1: Einlernen abgeschlossen?) und dann abgespeichert ($U^{R,lern}_i$). Dazu ist es erforderlich, dass der Fahrer dem System zur Reifendrucküberwachung bzw. dem Verfahren das Vorliegen eines ordnungsgemäßen Reifendrucks z.B. per Tasterdruck anzeigt. Nach erfolgtem Lernen (JA in Abfrage 4 in Fig. 1) erfolgt eine kontinuierliche Überwachung (Block 5) durch Vergleich der aktuellen Abrollumfänge $U^{R,akt}_i$ mit den gelernten Werten $U^{R,lern}_i$. Überschreitet die Differenz $U^{R,lern}_i - U^{R,akt}_i$ einen Schwellenwert, so liegt ein Hinweis für einen Druckverlust vor.
Die Abrollumfänge $U^R_i$ der Reifen hängen im Wesentlichen von der Geschwindigkeit, dem Antriebsmoment, den Seitenkräften und der Radlast ab. Insbesondere die Abrollumfänge $U^R_i$ der angetriebenen Räder hängen stark vom Schlupf ab, welcher im Wesentlichen durch das anliegende Bremsmoment $M_{Brems}$ und Motormoment $M_{Antrieb}$ bestimmt wird. Es gilt für die Abrollumfänge $U^R_i$ der Zusammenhang

$$U^R_i = \frac{v^R_i \cdot \cos\alpha_i}{\omega^{dreh}_i} = \frac{v^R_i \cdot \cos\alpha_i}{\omega_0^{dreh}_i + \Delta\omega^{dreh}_i}$$

wobei $\omega_0^{dreh}_i$ aus einer idealen Abrollbewegung resultiert und $\Delta\omega^{dreh}_i$ den schlupfabhängigen Anteil der Raddrehzahl darstellt. Für eine Reifendrucküberwachung stellt $\Delta\omega^{dreh}_i$ somit eine Störung dar.

**[0035]** Um die für die Praxis erforderliche Genauigkeit und Robustheit für die Drucküberwachung zu erreichen, ist es daher notwendig, das Lernen und das Erkennen / Überwachen auf Fahrsituationen mit geringem Schlupf zu beschränken (z.B. Beschränkung auf Geradeausfahrt) oder den oben beschriebenen Einfluss zu berücksichtigen bzw. zu kompensieren.

**[0036]** Der Einfluss kann durch das Lernen und das Erkennen / Überwachen in Brems- und/oder Motormomentenbereichen berücksichtigt werden oder durch eine kontinuierliche Korrektur kompensiert werden.

**[0037]** Im Falle des Lernens und Erkennens / Überwachens in z.B. Brems- und/oder Motormomentenbereichen wird die Differenz $U^{R,lern}_i$ - $U^{R,akt}_i$ mit dem zu dem aktuellen Messwert $U^{R,akt}_i$ gehörigen Lernwert $u^{R,lern}_i$ für dieselben Werte von Brems- und/oder Motormoment bestimmt.

**[0038]** Im Falle einer kontinuierlichen Korrektur wird ein Zusammenhang f zwischen Abrollumfang $U^R_i$ und Bremsmoment $M_{Brems}$ und/oder Motormoment $M_{Antrieb}$

$$U^R_i = f(M_{Brems}, M_{Antrieb})$$

in Form einer Kennlinie eingelernt. Zum Erkennen / Überwachen wird dann der aktuell ermittelte Radumfang $U^{R,akt}_i$ um diesen Anteil f reduziert, um den korrigierten Abrollumfang $U^R_i$-$^{korr}$ zu erhalten:

$$U^{R}_{i}{}^{korr} = U^{R,akt}_i - f(M_{Brems}, M_{Antrieb})$$

**[0039]** Ein entsprechendes Vorgehen kann zusätzlich oder alternativ für andere Einflüsse wie Geschwindigkeit, Querbeschleunigung, Gierrate, Last und/oder Querkräfte erfolgen.

**[0040]** Wird die Abhängigkeit von der Last beim Einlernen nicht explizit berücksichtigt bzw. keine Korrektur der Radumfänge bzgl. der Last durchgeführt (siehe Beschreibung oben), so sollt, um den Einfluss der Last möglichst auszuschließen, der Reset nur bei Teillast ausgeführt werden. Eine spätere Lasterhöhung führt dann zu kleineren Abrollumfängen, die aufgrund der stärkeren Auslastung der Reifen eventuell schon bewarnt werden müssen.

**[0041]** Gemäß eines Ausführungsbeispiels wird das erfindungsgemäße Verfahren in der Kombination mit einem DDS angewendet, und dient dabei vorrangig zur Erkennung eines gleichzeitigen Druckverlustes an allen vier Rädern. Gegenüber einer alleinigen Anwendung des DDS-Verfahrens ergibt sich darüber hinaus der Vorteil, dass eine insgesamt zu hohe Auslastung des Reifens bewarnt und damit vermieden werden kann, unabhängig ob sie durch Druckverlust oder Radlasterhöhung hervorgerufen wurde.

**[0042]** Gemäß eines anderen Ausführungsbeispiels wird das erfindungsgemäße Verfahren in Kombination mit einem direkt messenden Reifendruckkontrollsystem einzusetzen. In diesem Fall kann das Anzeigen der korrekten Drücke per Taster (Reset durch den Fahrer bei vorliegen von korrekten Drücken) auch entfallen, und ein internes Signal vom direkten System (TPMS: tire pressure monitoring system) weitergegeben werden (automatischer Reset bei dem erfindungsgemäßen Verfahren). Es kann damit eine Überwachung der Plausibilität der TPMS-Informationen erfolgen, und damit liegt eine redundante Druckinformation vor, die es z.B. erlaubt, den Reifendruck auch als Eingangsgröße für sicherheitsrelevante Fahrzeugregelsysteme wie ABS (Antiblockiersystem) und/oder ESP (elektronisches Stabilitätsprogramm) zu verwenden.

**[0043]** Vorteile des erfindungsgemäßen Verfahrens gegenüber dem Stand der Technik sind:

- Erkennung eines gleichzeitigen Druckverlusts an allen vier Reifen, und
- Erweiterung des Arbeitsbereichs für Kurvenfahrten.

**[0044]** Es sind verschiedene Messverfahren für den Sensor zur Bestimmung der absoluten Fahrzeuggeschwindigkeit möglich. Sensoren zur Bestimmung der absoluten Fahrzeuggeschwindigkeit beruhen in der Regel auf optischen Systemen, welche die Reflektion bzw. das Abbild der Fahrbahn mit einem optischen Sensor erfassen. Dazu wird die Fahrbahn mit einem bestimmten optischen Signal oder einer Lichtquelle bestrahlt. Die Auswertung dieser Signale basiert zumeist auf dem Prinzip der optischen Korrelation oder des optischen Flusses.

**Patentansprüche**

1. Verfahren zur Überwachung des Zustandes eines Reifens, bei welchem aus Raddrehzahlsignalen ($\omega^{dreh}_i$) der Fahrzeugräder mindestens ein Analysewert ($U^R_i$) gebildet wird, aus welchem auf einen Reifenzustand geschlossen wird, wobei der Analysewert ($U^R_i$) ein absoluter Abrollumfang eines Reifens oder eine den absoluten Abrollumfang eines

Reifens repräsentierende Größe, insbesondere ein dynamischer Reifenradius, ist, welcher durch eine Auswertung von Raddrehzahlsignalen ($\omega^{dreh}_i$) und Signalen von mindestens einem Sensor zur Messung der Geschwindigkeit des Fahrzeugs über Untergrund bestimmt wird, und aus dem Analysewert ($U^R_i$) auf einen Druckverlust und/oder eine Belastung/Auslastung des Reifens geschlossen wird, wobei der mindestens eine Sensor zur Messung der Geschwindigkeit des Fahrzeugs über Untergrund auf einem optischen oder Radar basierten Messverfahren basiert, **dadurch gekennzeichnet, dass** aus den Signalen des Sensors zur Messung der Geschwindigkeit des Fahrzeugs über Untergrund eine Fahrzeuglängsgeschwindigkeit ($v^F_x$) und eine Fahrzeugquergeschwindigkeit ($v^F_y$) bestimmt werden, aus welchen, insbesondere für jedes Rad, absolute Fahrzeuggeschwindigkeiten an den Radaufstandspunkten ($v^R_i$) bestimmt werden, wobei bei der Bestimmung der absoluten Fahrzeuggeschwindigkeiten an den Radaufstandspunkten ($v^R_i$) eine Gierrate ($\dot{\psi}$) berücksichtigt wird.

2. Verfahren nach Anspruch 1, **dadurch gekennzeichnet, dass** aus den absoluten Fahrzeuggeschwindigkeiten an den Radaufstandspunkten ($v^R_i$), insbesondere für jedes Rad, Geschwindigkeitskomponenten in Radlängsrichtung bestimmt werden.

3. Verfahren nach Anspruch 2, **dadurch gekennzeichnet, dass** bei der Bestimmung der Geschwindigkeitskomponenten in Radlängsrichtung ein Vorspurwinkel und/oder ein Radeinschlagswinkel ($\delta_i$) berücksichtigt wird/werden.

4. Verfahren nach einem der Ansprüche 1 bis 3, **dadurch gekennzeichnet, dass** aus einem Vergleich eines aktuell bestimmten Analysewertes ($U^{R,akt}_i$) mit wenigstens einem Analysevergleichswert ($U^{R,lern}_i$) auf einen Druckverlust und/oder eine Belastung/Auslastung des Reifens geschlossen wird.

5. Verfahren nach Anspruch 4, **dadurch gekennzeichnet, dass** der Analysevergleichswert ($U^{R,lern}_i$) eingelernt wird, wenn ein Einlernen durch den Fahrer durch Betätigung eines Betätigungselements oder einer Betätigungsfunktion initiiert wird, oder wenn durch ein zweites Reifenzustandsüberwachungssystem, insbesondere ein direktes Reifendrucküberwachungssystem mit mindestens einem Reifendrucksensor, ein automatisches Einlernen gestartet wird.

6. Verfahren nach Anspruch 4 oder 5, **dadurch gekennzeichnet, dass** Analysevergleichswerte ($U^{R,lern}_i$) in Abhängigkeit, insbesondere in Wertebereichen, von mindestens einer der folgenden Fahrzustandsgrößen vorgegeben sind oder eingelernt werden: Fahrzeuggeschwindigkeit, Bremsmoment, Antriebsmoment, Gierrate, Last, Querkräfte und Querbeschleunigung, und dass der Vergleich von aktuell bestimmtem Analysewert ($U^{R,akt}_i$) und Analysevergleichswert ($U^{R,lern}_i$) bei bezüglich der/den Fahrzustandsgröße(n) vergleichbaren/m Wert(en) durchgeführt wird.

7. Verfahren nach Anspruch 4 oder 5, **dadurch gekennzeichnet, dass** Analysevergleichswerte ($U^{R,lern}_i$) und/oder aktuell bestimmte Analysewerte ($U^{R,akt}_i$) bezüglich ihrer Abhängigkeit von mindestens einer der folgenden Fahrzustandsgrößen korrigiert werden: Fahrzeuggeschwindigkeit, Bremsmoment, Antriebsmoment, Gierrate, Last, Querkräfte und Querbeschleunigung.

8. Verfahren nach Anspruch 7, **dadurch gekennzeichnet, dass** zur Korrektur der Analysevergleichswerte ($U^{R,lern}_i$) und/oder der aktuell bestimmten Analysewerte ($U^{R,akt}_i$) mindestens ein funktionaler Zusammenhang (f) zwischen dem Analysevergleichswert und/oder Analysewert ($U^{R,lern}_i$, $U^{R,akt}_i$) und der/den Fahrzustandsgröße(n) eingelernt wird.

9. Verfahren nach mindestens einem der Ansprüche 1 bis 8, **dadurch gekennzeichnet, dass** dieses in einem indirekt und/oder direkt messenden Reifendrucküberwachungssystem durchgeführt wird.

10. Verfahren nach mindestens einem der Ansprüche 1 bis 9, **dadurch gekennzeichnet, dass** die aus den Analysewerten ($U^R_i$) gewonnenen Informationen zur Regelung eines Bremsdruckes in einem elektronischen Fahrzeugregelsystem, insbesondere einem Antiblockiersystem (ABS) oder einem elektronischen Stabilitätsprogramm (ESP), herangezogen werden.

11. Vorrichtung zur Überwachung des Zustandes eines Reifens, welcher an einem Fahrzeug angeordnet ist, mit Sensoren zur Bestimmung von Raddrehzahlsignalen der Räder und mindestens einem Sensor zur Messung der Geschwindigkeit des Fahrzeugs über Untergrund, wobei diese eine Analyseeinheit umfasst, in welcher durch eine Auswertung der Raddrehzahlsignale ($\omega^{dreh}_i$) und der Signale des Sensors zur Messung der Geschwindigkeit des Fahrzeugs über Untergrund ein absoluter Abrollumfang ($U^R_i$) eines Reifens oder eine den absoluten Abrollumfang eines Reifens repräsentierende Größe, insbesondere ein dynamischer Reifenradius, bestimmt wird, anhand welchem/r der Reifen auf einen Druckverlust und/oder eine Belastung/Auslastung überwacht wird, wobei der mindestens eine Sensor zur Messung der Geschwindigkeit des Fahrzeugs über Untergrund auf einem optischen oder Radar basierten Messverfahren basiert, **dadurch gekennzeichnet, dass** in der Analyseeinheit ein Verfahren gemäß einem der Ansprüche 1 bis 10 durchgeführt wird.

**Claims**

1. Method for monitoring the state of a tire, in which method at least one analysis value ($U^k_i$), from which a tire state is inferred, is formed from wheel speed signals ($\omega^{dreh}_i$) of the vehicle wheels, wherein the analysis value ($U^R_i$) is an absolute rolling circumference of a tire or a variable which represents the absolute rolling circumference of a tire, in particular a dynamic tire radius, which is determined by means of an evaluation of wheel speed signals ($\omega^{dreh}_i$) and signals from at least one sensor for measuring the speed of the vehicle over an underlying surface, and a pressure loss and/or a load/working load on the tire are inferred from the analysis value ($U^k_i$), wherein the at least one sensor for measuring the speed of the vehicle over an underlying surface is based on an optical measuring method or a measuring method which is based on radar, **characterized in that** a vehicle longitudinal speed ($v^F_x$) and a vehicle lateral speed ($v^F_y$) are determined from the signals of the sensor for measuring the speed of the vehicle over an underlying surface, from which absolute vehicle speeds at the wheel contact points ($v^R_i$) are determined, in particular for each wheel, wherein the speed components are determined in the wheel longitudinal direction from the absolute vehicle speeds at the wheel contact points, in particular for each wheel. A yaw rate ($\psi$) is taken into account during the determination of the absolute vehicle speeds at the wheel contact points ($v^R_i$).

2. Method according to Claim 1, **characterized in that** speed components in the wheel longitudinal direction are determined from the absolute vehicle speeds at the wheel contact points ($v^R_i$), in particular for each wheel.

3. The method as claimed in Claim 2, **characterized in that** a toe-in angle and/or a wheel lock angle ($\delta_i$) are/is taken into account during the determination of the speed components in the wheel longitudinal direction.

4. Method according to one of Claims 1 to 3, **characterized in that** a pressure loss and/or a load/working load on the tire are inferred from a comparison of a currently determined analysis value ($U^{R,akt}_i$) with at least one analysis comparison value ($U^{R,lern}_i$).

5. The method as claimed in Claim 4, **characterized in that** the analysis comparison value ($U^{R,lern}_i$) is learnt if a learning process is initiated by the driver by activation of an activation element or of an activation function, or if an automatic learning process is started by a second tire state monitoring system, in particular a direct tire pressure monitoring system with at least one tire pressure sensor.

6. The method as claimed Claim 4 or 5, **characterized in that** analysis comparison values ($U^{R,lern}_i$) are predefined or learnt as a function of at least one of the following travel state variables, in particular in value ranges: vehicle speed, braking torque, drive torque, yaw rate, load, lateral forces and lateral acceleration, and **in that** the comparison of the currently determined analysis value ($U^{R,akt}_i$) and the analysis comparison value ($U^{R,lern}_i$) is carried out in the case of a value or values which is/are comparable in terms of the travel state variable or variables.

7. The method as claimed in Claim 4 or 5, **characterized in that** analysis comparison values ($U^{R,lern}_i$) and/or currently determined analysis values ($U^{R,akt}_i$) are corrected in terms of their dependence on at least one of the following travel state variables: vehicle speed, braking torque, drive torque, yaw rate, load, lateral forces and lateral acceleration.

8. The method as claimed in Claim 7, **characterized in that**, in order to correct the analysis comparison values ($U^{k,lern}_i$) and/or the currently determined analysis values ($U^{R,akt}_i$), at least one functional relationship (f) between the analysis comparison value and/or analysis value ($U^{R,lern}_i$, $U^{R,akt}_i$) and the travel state variable or variables is learnt.

9. The method as claimed in at least one of Claims 1 to 8, **characterized in that** said method is carried out in an indirectly measuring and/or directly measuring tire pressure monitoring system.

10. The method according to at least one of Claims 1 to 9, **characterized in that** the information which is acquired from the analysis values ($U^R_i$) is used to control a braking pressure in an electronic vehicle control system, in particular an anti-lock brake system (ABS) or an electronic stability program (ESP).

11. Device for monitoring the state of a tire which is arranged on a vehicle, having sensors for determining wheel speed signals of the wheels and at least one sensor for measuring the speed of the vehicle over an underlying surface, wherein said device comprises an analysis unit in which an absolute rolling circumference ($U^R_i$) of a tire or a variable which represents the absolute rolling circumference of a tire, in particular a dynamic tire radius, is determined by means of an evaluation of the wheel speed signals ($\omega^{dreh}_i$) and of the signals of the sensor for measuring the speed of the vehicle over an underlying surface, by means of which rolling circumference ($U^R_i$) or variable the tire is monitored for a pressure loss and/or a load/working load, wherein the at least one sensor for measuring the speed of the vehicle over an underlying surface is based on an optical measuring method or a measuring method which is based on radar, **characterized in that** a method according to one of Claims 1 to 10 is carried out in the analysis unit.

**Revendications**

1. Dispositif de surveillance de l'état d'un pneu, selon lequel au moins une valeur d'analyse ($U^R_i$) est formée à partir de signaux de vitesse de rotation de roue ($\omega^{dreh}_i$) des roues du véhicule, à partir de laquelle est déduit un état de pneu, la valeur d'analyse ($U^R_i$) étant un périmètre de roulement absolu d'un pneu ou une grandeur représentant le périmètre de roulement absolu d'un pneu, notamment un rayon de pneu dynamique, lequel est déterminé par une interprétation des signaux de vitesse de rotation de roue ($\omega^{dreh}_i$) et de signaux d'au moins un capteur destiné à mesurer la vitesse du véhicule au-dessus du sol, et une chute de pression et/ou une charge/sollicitation du pneu est déduite à partir de la valeur d'analyse ($U^R_i$), l'au moins un capteur se basant sur un procédé de mesure optique ou par radar pour mesurer la vitesse du véhicule au-dessus du sol, **caractérisé en ce qu'**une vitesse longitudinale de véhicule ($v^F_x$) et une vitesse transversale de véhicule ($v^F_y$) sont déterminées à partir des signaux du capteur destiné à mesurer la vitesse du véhicule au-dessus du sol, à partir desquelles sont déterminées des vitesses de véhicule absolues au niveau des points de contact des roues ($v^R_i$), notamment pour chaque roue, un taux de lacet ($\psi$) étant pris en compte lors de la détermination des vitesses de véhicule absolues au niveau des points de contact des roues ($v^R_i$).

2. Procédé selon la revendication 1, **caractérisé en ce que** des composantes de vitesse dans le sens longitudinal des roues sont déterminées à partir des vitesses de véhicule absolues au niveau des points de contact des roues ($v^R_i$), notamment pour chaque roue.

3. Procédé selon la revendication 2, **caractérisé en ce qu'**un angle de pinçage des roues avant et/ou un angle de braquage des roues ($\delta_i$) est/sont pris en compte lors de la détermination des composants de vitesse dans le sens longitudinal des roues.

4. Procédé selon l'une des revendications 1 à 3, **caractérisé en ce qu'**une chute de pression et/ou une charge/sollicitation du pneu est déduite à partir d'une comparaison d'une valeur d'analyse ($U^{R,akt}_i$) actuellement définie avec au moins une valeur comparative d'analyse ($U^{R,lern}_i$).

5. Procédé selon la revendication 4, **caractérisé en ce que** la valeur comparative d'analyse ($U^{R,lern}_i$) est apprise lorsqu'un apprentissage est initié par le conducteur en actionnant un élément d'actionnement ou une fonction d'actionnement, ou lorsqu'un apprentissage automatique est démarré par un deuxième système de surveillance de l'état de pneu, notamment un système de surveillance de l'état de pneu direct comprenant au moins un capteur de pression de pneu.

6. Procédé selon la revendication 4 ou 5, **caractérisé en ce que** les valeurs comparatives d'analyse ($U^{R,lern}_i$) sont prédéfinies ou apprises en dépendance, notamment dans les plages de valeurs, à au moins l'une des grandeurs d'état de conduite suivantes : vitesse du véhicule, moment de freinage, couple d'entraînement, taux de lacet, charge, forces transversales et accélération transversale, et **en ce que** la comparaison de la valeur d'analyse ($U^{R,akt}_i$) actuellement définie et la valeur comparative d'analyse ($U^{R,lern}_i$) est effectuée en présence de valeur (s) comparable(s) concernant la/les grandeur(s) d'état de conduite.

7. Procédé selon la revendication 4 ou 5, **caractérisé en ce que** les valeurs comparatives d'analyse ($U^{R,lern}_i$) et/ou les valeurs d'analyse ($U^{R,akt}_i$) actuellement définies sont corrigées pour ce qui concerne leur dépendance à au moins l'une des grandeurs d'état de conduite suivantes : vitesse du véhicule, moment de freinage, couple d'entraînement, taux de lacet, charge, forces transversales et accélération transversale.

8. Procédé selon la revendication 7, **caractérisé en ce qu'**au moins une relation fonctionnelle (f) entre la valeur comparative d'analyse et/ou la valeur d'analyse ($U^{R,lern}_i$, $U^{R,akt}_i$) et la/les grandeur (s) d'état de conduite est apprise en vue de la correction des valeurs comparatives d'analyse ($U^{R,lern}_i$) et/ou des valeurs d'analyse ($U^{R,akt}_i$) actuellement définies.

9. Procédé selon au moins l'une des revendications 1 à 8, **caractérisé en ce que** celui-ci est mis en oeuvre dans un système de surveillance de la pression de pneu à mesure indirecte et/ou directe.

10. Procédé selon au moins l'une des revendications 1 à 9, **caractérisé en ce que** les informations acquises à partir des valeurs d'analyse ($U^R_i$) sont utilisées pour la régulation d'une pression de freinage dans un système de régulation électronique de véhicule, notamment un système antiblocage (ABS) ou un programme de stabilisation électronique (ESP).

11. Dispositif de surveillance de l'état d'un pneu, lequel est monté sur un véhicule, comprenant des capteurs destinés à déterminer des signaux de vitesse de rotation de roue des roues et au moins un capteur destiné à mesurer la vitesse du véhicule au-dessus du sol, celui-ci comprenant une unité d'analyse dans laquelle un périmètre de roulement ($U^k_i$) absolu d'un pneu ou une grandeur représentant le périmètre de roulement absolu d'un pneu, notamment un rayon de pneu dynamique, est déterminé(e) par une interprétation des signaux de vitesse de rotation de roue ($\omega^{dreh}_i$) et des signaux du capteur destiné à mesurer la vitesse du véhicule au-dessus du sol, au moyen duquel/de laquelle une chute de pression et/ou une charge/sollicitation du pneu est surveillée, l'au moins un capteur se basant sur un procédé de mesure optique ou par radar pour mesurer la vitesse du véhicule au-dessus du sol, **caractérisé en ce qu'**un procédé selon l'une des revendications 1 à 10 est mis en oeuvre dans l'unité d'analyse.

Fig. 1

**Fig. 2**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19926616 C2
- DE 10058140 A1
- WO 0187647 A1
- DE 102005014099 A1
- GB 2246461 A